# EUROPEAN PATENT SPECIFICATION

(11) **EP 2 312 681 B1**
(45) Date of publication and mention of the grant of the patent: **12.12.2012**
(21) Application number: 10166049.6
(22) Date of filing: 15.06.2010
(51) Int. Cl.: H01M 8/24, H01M 8/04, H01M 8/12

(54) **A housing for a solid oxide fuel cell**
Gehäuse für eine Festkörperoxidbrennstoffzelle
Boîtier pour pile à combustible d'oxyde solide

(30) Priority: 14.10.2009 US 251468 P; 29.01.2010 US 696331
(43) Date of publication of application: 20.04.2011
(73) Proprietor: Samsung SDI Co., Ltd., Gyeonggi-do (KR)
(72) Inventor: Kong, Sang-Jun c/o Legal & IP Team, Giheung-gu, Yongin-si Gyeonggi-do (KR); Cheong, Kyeong-Beom c/o Legal & IP Team, Giheung-gu, Yongin-si Gyeonggi-do (KR); Kim, Ki-Woon c/o Legal & IP Team, Giheung-gu, Yongin-si Gyeonggi-do (KR); Yoon, Duk-Hyoung c/o Legal & IP Team, Giheung-gu, Yongin-si Gyeonggi-do (KR); Kwon, Tae-Ho c/o Legal & IP Team, Giheung-gu, Yongin-si Gyeonggi-do (KR); Kwon, Tae-Ho c/o Legal & IP Team, Giheung-gu, Yongin-si Gyeonggi-do (KR)
(74) Representative: Walaski, Jan Filip

(56) References cited:
- EP-A1- 1 909 349
- WO-A1-2008/003976
- WO-A1-2009/038175
- JP-A- 2008 300 275
- US-A1- 2004 253 504

## Description

The present invention relates to a solid oxide fuel cell (SOFC) housing, in particular to a housing in which a uniform amount of fluid can flow around a plurality of SOFC cells. Solid oxide fuel cells (SOFCs) have advantages of no pollution, high-efficiency generation and the like. The SOFCs are applied to static generation systems, small independent power sources, automotive power sources and the like.

Currently, SOFC stacks are broadly divided into a cylindrical type, an integral type and a planar type in accordance with their shapes. Each of the types has unique advantages and disadvantages. Among them, the cylindrical type SOFC has advantages in that gas sealing is not required and its mechanical strength is excellent.

EP 1 909 349 discloses a solid oxide fuel cell module.

According to the invention, there is provided a solid oxide fuel cell according to claim 1.

In one embodiment, there is provided a solid oxide fuel cell comprising a housing (hereinafter, referred to as an SOFC housing) in which a uniform amount of fluid can flow around a plurality of SOFC cells, e.g., anode supported cylindrical SOCF cells.In another embodiment, there is provided an SOFC having the SOFC housing, which can improve performance of a stack or system and perform stable operation for a long period of time.

According to claim 1, there is provided a SOFC comprising a housing, the housing comprising an inlet to allow fluid to flow into the housing, an outlet to allow fluid to flow out of the housing and flow path extending means adjacent to the inlet, the flow path extending means being configured so that fluid flowing into the housing through the inlet flows m a zigzag shape or a meandering shape through the flow path extending means.

The flow path extending means may be arranged to form a plurality of interconnected flow paths, wherein fluid flowing along each of the flow paths is confined to flow in a single direction. The flow path extending means may be arranged so that fluid flowing in the flow paths flows in opposite directions in adjacent ones of the flow paths.

According to claim 1 the flow path extending means comprises a plurality of planar partition walls disposed in an interdigitated form between a first wall of the housing and a second wall of the housing opposite the first wall. The plurality of planar partition walls may include first and second partition walls, one end of the or each of the first partition walls being attached to the first wall adjacent to the inlet and one end of the or each of the second partition walls being attached to the second wall.

According to claim 1 the inlet and the outlet are formed in the same first wall of the housing. The outlet may comprise a slot in a bottom portion of the first wall or may comprise a plurality of outlet holes in the first wall.

The housing may further comprise a perforated plate coupled to an outlet side of the flow path extending means. Where the flow path extending means comprise partition walls, the perforated plate may be perpendicular to the partition walls. The perforated plate may have a plurality of discharge holes, wherein each of the discharge holes may have a guide tube disposed therein. The diameters of the discharge holes and/or the guide tubes may increase with increasing distance of the discharge holes from the outlet side of the flow path extending means. Intervals between adjacent discharge holes and/or the guide tubes may decrease with increasing distance of the discharge holes from the outlet side of the flow path extending means.

The housing may comprise a plurality of inlets and may further comprise diverting means for diverting the flow of fluid received through the inlets into the flow path extending means. In this case, the flow path extending means may comprise a plurality of planar partition walls disposed in an interdigitated form between a first wall of the housing and the diverting means.

According to claim 1 there are a plurality of SOFC cells within the housing positioned to receive a uniform flow of fluid from the flow path extending means, the housing and the SOFC cells together forming a solid oxide fuel cell SOFC.

The accompanying drawings, together with the specification, illustrate exemplary embodiments of the present invention, and, together with the description, serve to explain the principles of the present invention.
FIG. 1 is a schematic perspective view of a solid oxide fuel cell (SOFC) housing according to an embodiment of the present invention.
FIG. 2 is a schematic perspective view of an SOFC illustrating the flow of a fluid in the SOFC housing of FIG. 1.
FIG. 3 is a schematic perspective view of an SOFC housing according to another embodiment of the present invention.
FIG. 4 is a schematic perspective view of an SOFC illustrating the flow of a fluid in the SOFC housing of FIG. 3.
FIG. 5 is a schematic perspective view illustrating the flow of a fluid in an SOFC housing according to a comparative example.
FIGS. 6A to 6C are graphs illustrating flow velocities of a fluid passing through three planes in the SOFC housing of FIG. 5, respectively.
FIG. 7 is a schematic perspective view of an SOFC housing according to still another embodiment of the present invention.
FIG. 8 is a schematic perspective view of an SOFC housing according to still another embodiment of the present invention.
FIG. 9 is a schematic sectional view of an SOFC illustrating the flow of a fluid in the SOFC housing of FIG. 8.
FIG. 10 is a cross-sectional view of the SOFC of FIG. 9.
FIGS. 11A to 11C are graphs illustrating flow velocities of a fluid passing through three planes in the SOFC housing of FIG. 10, respectively.
FIGS. 12A and 12B are schematic sectional views illustrating the structures of perforated plates and guide tubes, available for the SOFC housing according to the embodiment of the present invention.
FIG. 13A is a schematic sectional view illustrating the operation of an SOFC cell available for the SOFC according to the embodiment of the present invention.
FIG. 13B is a schematic perspective view illustrating the shape of another SOFC cell substituted for the SOFC cell of FIG. 13.

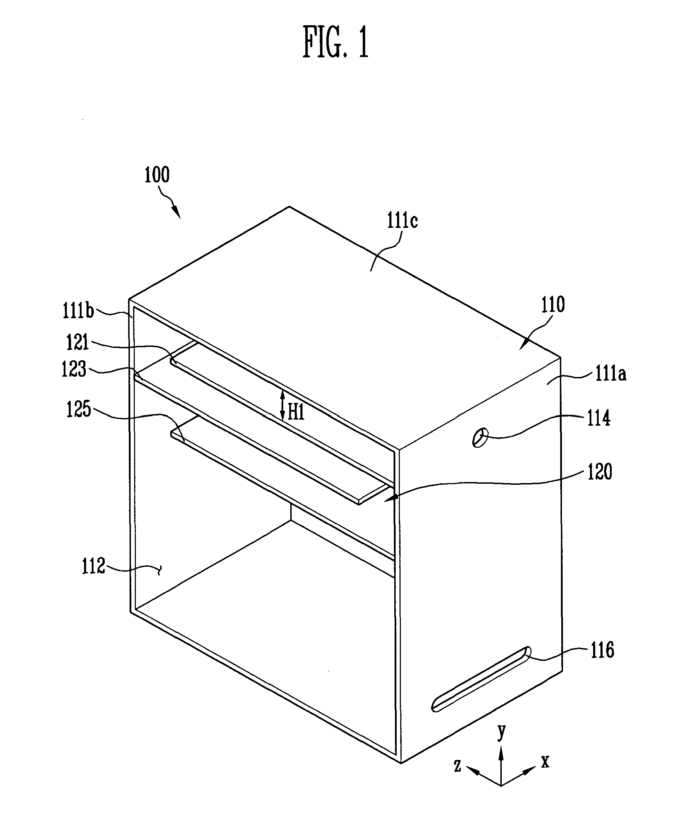

Referring to FIG. 1, the SOFC housing 100 includes a housing body 110 and a flow path extending unit 120 coupled to the housing body 110. The housing body 110 is provided with an internal space 112, at least one first opening 114 connected to the internal space 112 to allow a fluid to flow into the internal space 112 therethrough, and at least one second opening 116 connected to the internal space 112 to allow the fluid to flow out from the internal space 112 therethrough. The flow path extending unit 120 is disposed adjacent to the first opening 114 so that the fluid flowing into the internal space 112 through the first opening 114 flows in a zigzag form within the housing body 110.

The sectional area of the first opening 114 is relatively much smaller than that of the internal space 112 (corresponding to the x-y plane) in which the fluid flowing into the internal space 112 through the first opening 114 flows. In this case, in order to allow the fluid flowing into the internal space 112 through the first opening 114 to flow uniformly within the internal space 112, it is very important to allow the fluid not to be two-dimensionally distributed but to be one-dimensionally distributed in a concerned portion corresponding to the first opening 114. Therefore, in this embodiment, the fluid is one-dimensionally distributed through the flow path extending unit 120 connected to the first opening 114 so that the fluid can flow into the flow path extending unit 120 through the first opening 114.

In one embodiment, the flow path extending unit 120 may have a flow path structure formed with multistage screens or partition walls. More specifically, the flow path extending unit 120 has a flow path structure in which planar first and second partition walls 121 and 123 are disposed to extend in opposite directions while being spaced apart from each other at a predetermined interval. Here, one end of the first partition wall 121 is connected to a first wall 111a of the housing body 110 between the first wall 111a and a second wall 111b formed opposite to the first wall 111a, and one end of the second partition wall 123 is connected to the second wall 111b of the housing body 110. Such a structure may be referred to as an interdigitated structure.

In this embodiment, since the first and second openings 114 and 116 are provided at upper and lower portions of the first wall 111a, respectively, the flow path extending unit 120 is provided with another first partition wall 125 so that the fluid flowing into the flow path extending unit 120 through the first opening 114 smoothly flows out through the second opening 116 via the flow path extending unit 120. Similarly to the first partition wall 121, the planar first partition wall 125 has one end connected to the first wall 111a and is disposed to be spaced apart from the second partition wall 123 at a predetermined interval.

The flow path extending unit 120 has a zigzag or meandering form. Such a flow path structure is designed considering the limitation of the volume of the SOFC housing 100. For example, the flow path structure is designed so that the volume of the SOFC housing 100 is not substantially increased or is minimally increased.
In this embodiment, considering an effective flow path extending structure, the flow path extending unit 120 is provided so that the fluid flowing into the internal space 112 through the first opening 114 first flows between an inner surface of an upper wall 111c of the housing body 110 and an outer surface of the flow path extending unit 120, i.e., one surface of the first partition wall 121. In the following description, the flow path extending unit 120 may include a path between the inner surface of the upper wall 111c of the housing body 110 and the outer surface of the flow path extending unit 120, in view of the flow path extension.

In the flow path extending unit 120, the sectional area of a flow path in a direction approximately perpendicular to the flow direction (the z-direction) of the fluid is considerably smaller than the volume of the internal space 112. For example, the distance H1 between the upper wall 111c of the housing body 110 and the first partition wall 121 is similar to or smaller than the diameter of the first opening 114. In the flow path extending unit 120, the width of the flow path in a direction approximately perpendicular to the flow direction (the z-direction) of the fluid, i.e., in a direction (the x-direction) out of directions (the x-direction, the y-direction and the direction parallel with the x-y plane) approximately parallel with the first wall 111a is larger than the diameter of the first opening 114. For example, the width of the flow path may be approximately a few to a few tens times larger than the diameter of the first opening 114. However, the width of the flow path has a considerably smaller value than the length of the flow path of the flow path extending unit 120. The one-dimensional flow path structure is formed through the relationship between the length and width of the flow path.

The flow path of the flow path extending unit 120 may be extended as much as the length and number of first partition walls and/or the length and number of second partition walls are increased. Here, the first and second partition walls are disposed in a zigzag form. In this embodiment, distances in the direction (the y-direction) between adjacent partition walls may be identical.

According to the aforementioned configuration, the flow path extending unit 120 prevents the flow flowing into the housing 100 through the first opening 114 to be substantially distributed with vector components two-dimensionally different from each other. The flow path extending unit 120 allows the unequal velocity of the fluid flowing through the first opening 114 to be unified through the one-dimensional flow path structure.

That is, the flow path extending unit 120 allows the fluid flowing from at least one point to one-dimensionally flow through a flow path having a sufficient length. Accordingly, velocity components of the fluid passing through the flow path extending unit 120 are unified, so that the fluid can flow at an almost uniform velocity in the internal space 112 of the SOFC housing 100. At this time, the fluid flows by the entire difference in pressure within the SOFC housing 100.

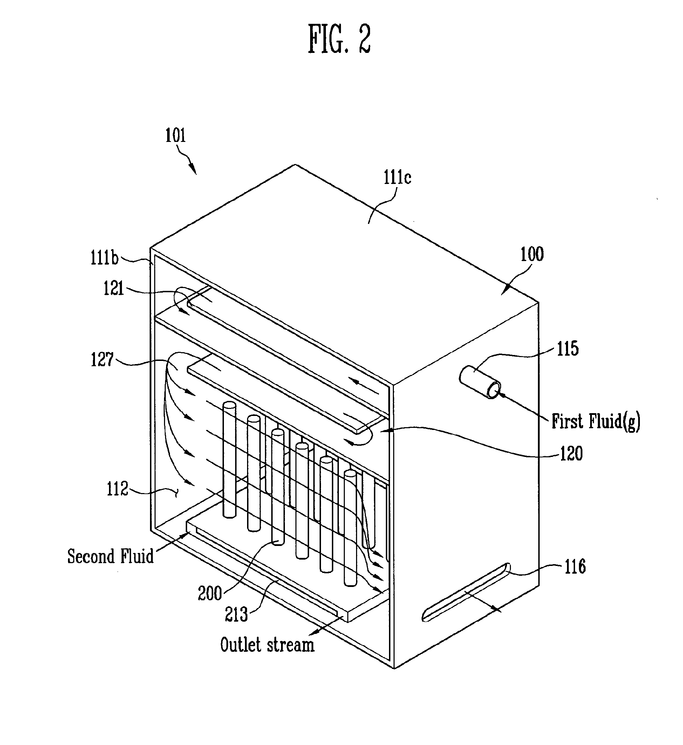

Referring to FIG. 2, the SOFC 101 includes the SOFC housing (hereinafter, referred to as the housing) of this embodiment, SOFC cells 200 (hereinafter, referred to as cells) mounted in the housing 100, and a reactant supply unit for supplying a fuel and an oxidizer to the cells 200.

The reactant supply unit may include a fuel supply unit and an oxidizer supply unit. The fuel or oxidizer supply unit may include a manifold connected to the cells 200. In the following description, for convenience of illustration, a gaseous first fluid supplied through the flow path extending unit 120 in the housing 100 is used as the oxidizer, and a second fluid supplied through a manifold 213 is used as the fuel. Here, the manifold 213 is coupled to the housing 100 and connected to the cells 200 so that a fluid can flow therethrough. The oxidizer may include air, pure oxygen gas and the like, and the fuel may include hydrogen, coal gas, natural gas, landfill gas and the like.

In this embodiment, the oxidizer supply unit (not shown) supplies air to the housing 100 through a pipe 115 connected to the first opening 114. In this case, the air flowing into the housing 100 first flows between the upper wall 111c of the housing 100 and the first partition wall 121 and then changes its direction on an inner surface of the second wall 111b to flow between the first partition wall 121 and the second partition wall 123. The air again changes its direction on an inner surface of the first wall 111a to flow between the second partition wall 123 and the first partition wall 125. Subsequently, the air again changes its direction and then passes around the cells 200 arranged within the internal space 112. Then, the air is discharged out from the housing 100 through the second opening 116.

In the aforementioned flow of the air, the air supplied through the pipe 115 under a predetermined pressure substantially one-dimensionally flows along the flow path sufficiently longer than the width of the flow path extending unit 120. The air is supplied to the internal space 112 of the housing in the state that vector components are unified. The air supplied to the internal space 112 of the housing 100 flows around the cells 200 at a substantially uniform flow velocity and is then discharged out from the housing 100 through the second opening 116.

According to the aforementioned configuration, the SOFC 101 can effectively generate electricity through an electrochemical reaction of the oxidizer uniformly supplied to a cathode of each of the cells 200 and the fuel supplied to an anode of each of the cells 200 through the manifold 213. The manifold 213 can discharge a reaction by-product such as water and an unburned fuel through the outlet stream.

As described above, in the SOFC 101 of this embodiment, an oxidizer with a uniform flow velocity is supplied around the cells 200 through the flow path extending unit 120. Accordingly, when assuming that the amount of fuel supplied to each of the cells 200 is uniform, the performance of the SOFC 101 can be improved, and the SOFC 101 can be stably operated for a long period of time.

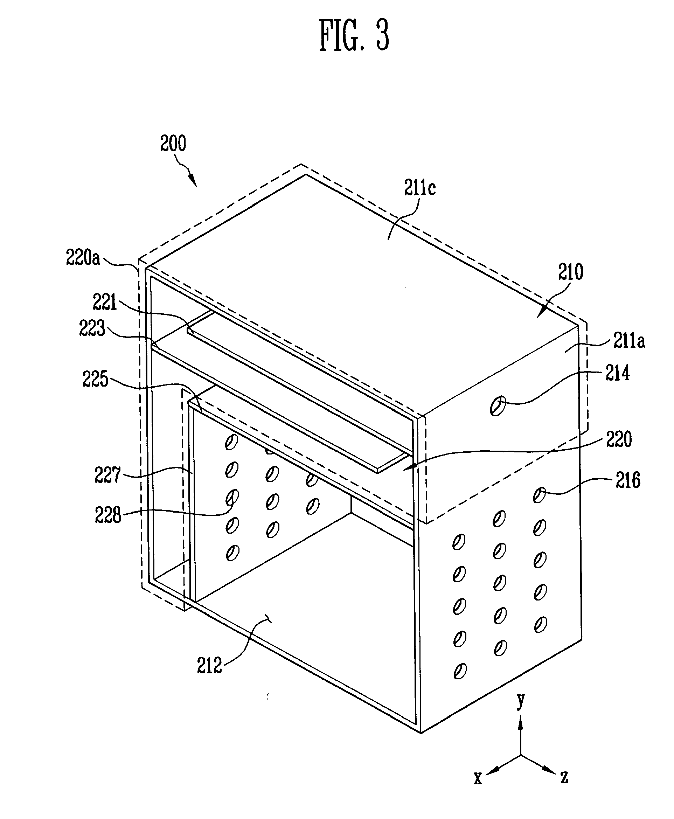

Referring to FIG. 3, the SOFC housing 200 includes a housing body 210, a flow path extending unit 220 coupled to the housing body 210, and a perforated plate 227 coupled to the flow path extending unit 220 at a downstream side of the flow direction of a fluid.

The housing body 210 is provided with an internal space 212 and first and second openings 214 and 216 connected to the internal space 212 so that the fluid can flow therethrough. The housing body 210 is provided with a first wall 211a. The first and second openings 214 and 216 are disposed at a predetermined interval on the first wall 211a. In this embodiment, the second opening 216 includes a plurality of holes.

Meanwhile, in this embodiment, the housing body 210 may accommodate the flow path extending unit 220. However, the present invention is not limited thereto. For example, the flow path extending unit 220 may be designed to have an upper wall 211c of the housing body 210 and to cover an upper opening of the housing body 210. Alternatively, the flow path extending unit 220 may be designed to have a portion 220a designated by the dotted line. In this case, a housing body is formed with a portion excluding the portion 220a from the housing body 210 of this embodiment.

The flow path extending unit 220 is provided so that air supplied through the first opening 214 under a predetermined pressure one-dimensionally flows through a flow path sufficiently longer than the width of the flow path. The flow path extending unit 220 is provided with a first partition wall 221, a second partition wall 223 and another first partition wall 225. The flow path extending unit 220 is substantially identical to the flow path extending unit 120 of FIG. 1.

The perforated plate 227 is positioned at the other end of the flow path to be opposite to the first opening 214 positioned at one end of the flow path, based on the flow path of the flow path extending unit 220. The perforated plate 227 is provided to allow the fluid discharged from an outlet of the flow path extending unit 220 to be appropriately distributed. The perforated plate 227 is provided with a plurality of holes 228 so that the fluid is distributed.

In this embodiment, the perforated plate 227 is provided so that the planar first partition wall 225 extends in a second direction (the y-direction) perpendicular to the planar first partition wall 225 extending in a first direction (the z-direction). That is, the perforated plate 227 is provided parallel with the x-y plane so as to be perpendicular to the planar first partition wall 225 parallel with the x-z plane.

According to the aforementioned configuration, the fluid can be discharged to the internal space 212 of the housing body 210 by allowing the fluid flowing into the housing body 210 through the first opening 214 to flow one-dimensionally and then be appropriately distributed.

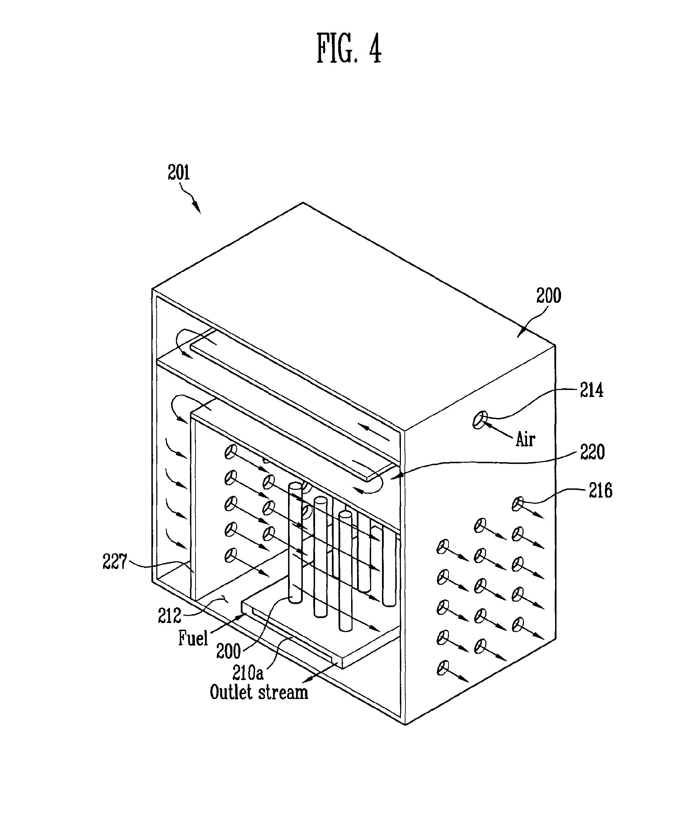

As illustrated in FIG. 4, the SOFC 201 includes the housing 200 of this embodiment, a plurality of cells 200 accommodated in the housing 200, an oxidizer supply unit (not shown) for supplying air to each of the cells through a predetermined flow path in the housing 200, and a fuel supply unit (not shown) for supplying a fuel to each of the cells 200. The fuel supply unit includes a manifold 210a connected to the plurality of cells 200 so that a fluid can flow therethrough.

In this embodiment, the oxidizer supply unit (not shown) supplies air to the housing 200 through the first opening 214. The air flowing into the housing 200 passes through the flow path extending unit 220 and is then distributed into the internal space 212 through the perforated plate 227. The air distributed into the internal space 212 passes around the plurality of cells 200 and is then discharged to the exterior of the housing 200 through the second openings 216.

According to the aforementioned configuration, the SOFC 201 can effectively generate electricity through an electrochemical reaction of oxygen uniformly supplied to a cathode positioned on an outer surface of each of the cells 200 and a fuel supplied to an anode positioned at an inner surface of each of the cells 200 through the manifold 210a. The manifold 210a can discharge a reaction byproduct such as water and an unburned fuel to the exterior of the housing 200 through outlet stream.

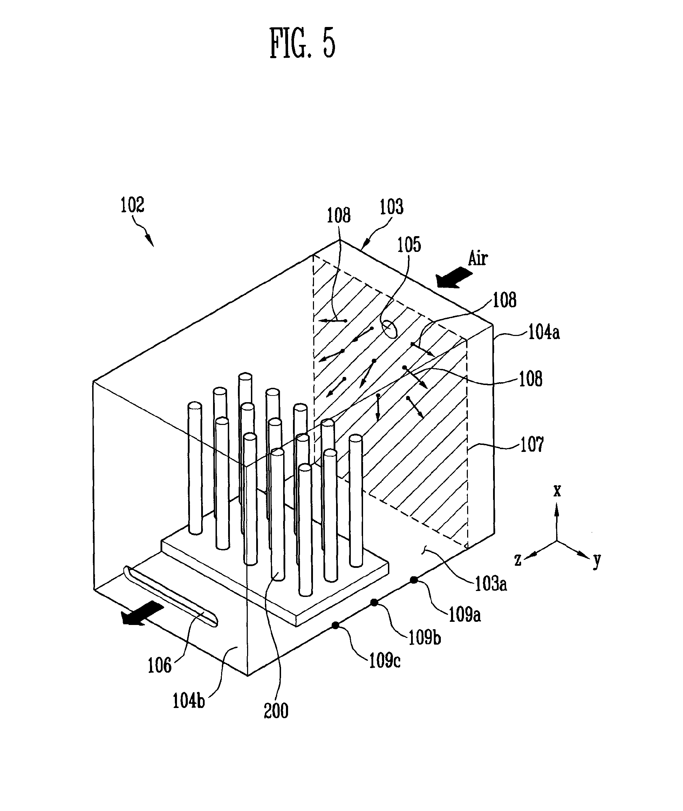

As described above, in the SOFC 201 of this embodiment, air with a uniform flow velocity is supplied around the cells 200 through the flow path extending unit 220 and the perforated plate 227. Accordingly, when assuming that the amount of fuel supplied to each of the cells 200 is uniform, the performance of the SOFC 201 can be improved, and the SOFC 201 can be stably operated for a long period of time. FIG. 5 is a schematic perspective view illustrating the flow of a fluid in an SOFC housing according to a comparative example.

In the comparative example, a plurality of cells are mounted in a housing excluding the flow path extending unit from the housing of FIG. 1, and the flow velocities of air supplied into the housing are measured.

As illustrated in FIG. 5, the SOFC 102 according to the comparative example includes a housing 103 and a plurality of cells 200 accommodated in the housing 103.

The housing 103 is provided with a first wall 104a, a second wall 104b, a first opening 105 formed on the first wall 104a, and a second opening 106 formed on the second wall 104b. The housing 103 has a structure substantially identical to that of the housing of FIG. 1 except the flow path extending unit described above. Further, the housing 103 has the volume of an internal space 103a, substantially identical to that of the housing 100 of FIG. 2. The plurality of cells 200 are mounted in the housing 103. Here, the number and stacked/arranged form of the cells 200 are identical to those of the cells 200 of FIG. 2.

Although schematically shown in FIG. 5, in this comparative example, a total of 54 cells are used as the plurality of the cells 200. Here, the cells constitute 6 lines in the flow direction (the z-direction) of air and 9 lines in the y-direction.
The air flowing into the housing 103 through the first opening 105 is distributed with unequal vector components in the internal space 103a. The vector components of the air distributed into the internal space 103a from the first opening 105 may be shown as a plurality of arrows 108, based on a predetermined plane 107 spaced apart from the first wall 104a at a predetermined interval.

As described above, the air flowing into the housing 103 of the SOFC 102 of the comparative example under a predetermined pressure is two-dimensionally distributed on a plane corresponding to the plane 107 from a concerned portion corresponding to the first opening 105, so that the velocity distribution of the air is unequal.

That is, in the housing or SOFC of the comparative example, while the air flows from the first opening 105 to the second opening 106 via the internal space 103a, the velocities of the air in front, middle and rear portions of the internal space 103a; and bottom, center and top portions of the internal space 103a are considerably different due to the unequal velocity distribution of the air and the wall effect such as vector components of the air reflected from an inner surface of the housing 103.

The front, middle and rear portions of the internal space 103a correspond to x-y planes including first, second and third points 109a, 109b and 109c, respectively.

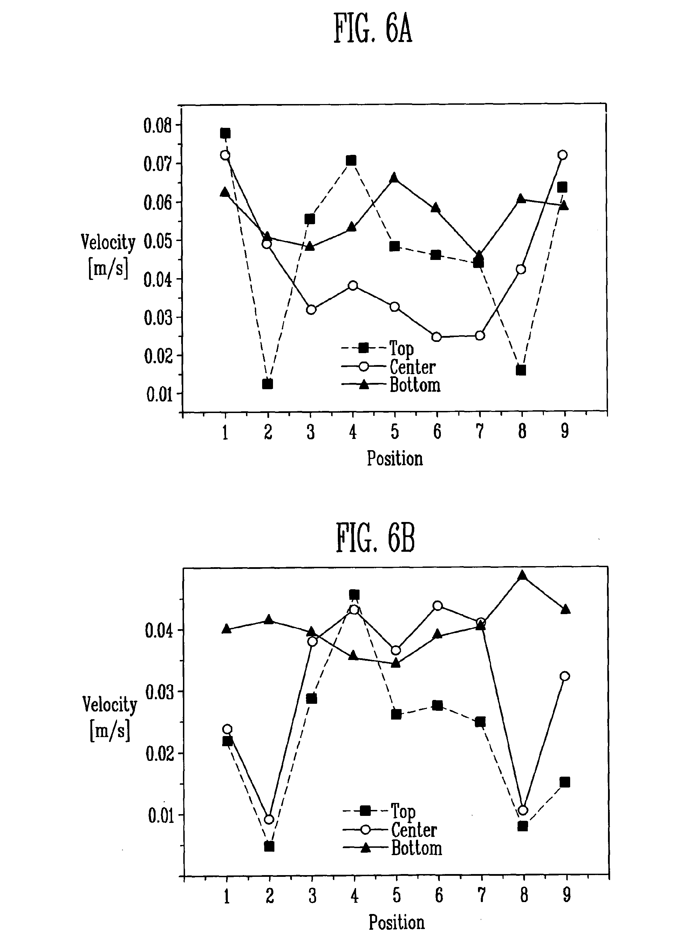

FIGS. 6A to 6C are graphs illustrating flow velocities of a fluid passing through three planes in the SOFC housing of FIG. 5, respectively. Here, the three planes correspond to the front, middle and rear portions of FIG. 5, respectively. FIG. 6A illustrates results obtained by measuring flow velocities of the air at top, center and bottom portions around each of the cells on first horizontal line in the front portion. As illustrated in FIG. 6A, the velocities of the air at bottom portions around respective nine cells in the front portion were measured from about 0.046m/s to about 0.066m/s, the velocities of the air at center portions around the respective nine cells in the front portion were measured from about 0.025m/s to about 0.071m/s, and the velocities of the air at top portions around the respective nine cells from the front portion were measured from about 0.011m/s to about 0.078m/s.

FIG. 6B illustrates results obtained by measuring flow velocities of the air at top, center and bottom portions between adjacent cells on third and fourth lines in the middle portion. As illustrated in FIG. 6B, the velocities of the air at bottom portions between nine pairs of adjacent cells in the middle portion were measured from about 0.033m/s to about 0.046m/s, the velocities of the air at center portions between the nine pairs of adjacent cells in the middle portion were measured from about 0.010m/s to about 0.041m/s, and the velocities of the air at top portions between the nine pairs of adjacent cells in the middle portion were measured from about 0.006m/s to about 0.043m/s.

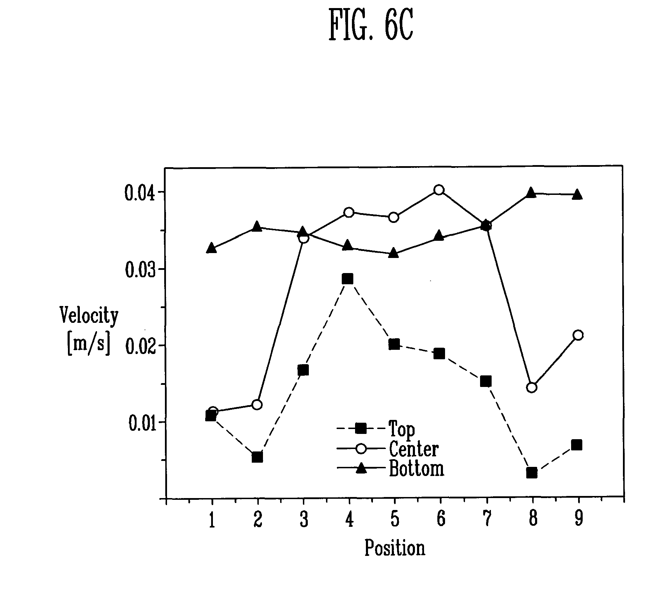

FIG. 6C illustrates results obtained by measuring flow velocities of the air at top, center and bottom portions around each of the cells on a sixth line in the rear portion. As illustrated in FIG. 6C, the velocities of the air at bottom portions around the respective nine cells in the rear portion were measured from about 0.032m/s to about 0.040m/s, the velocities of the air at center portions around the respective nine cells in the rear portion were measured from about 0.013m/s to about 0.040m/s, and the velocities of the air at top portions around the respective nine cells from the rear portion were measured from about 0.005m/s to about 0.030m/s.

In the SOFC 102 of the comparative example, the velocity of the air in the housing showed a large difference depending on a position of each of the cells, and its deviation showed up to the maximum of about 50%. As such, it can be seen that the SOFC 102 of the comparative example has unequal velocities of the air at all the positions of the internal space 103a of the housing 103.

According to this comparative example, in the SOFC 102, although it is assumed that a fuel supplied to each of the cells 200 is equal, oxygen in the air supplied to each of the cells 200 is unequal. Hence, performances of the respective cells 200 are remarkably different. Therefore, performance of a system may be lowered, and it may be difficult to operate the system for a long period of time.

Meanwhile, as another comparative example, velocities of air flowing into an internal space of a housing excluding the flow path extending unit from the housing in the SOFC of FIG. 4 were measured. The result was not almost different from that of the aforementioned comparative example. The velocities of the air in the housing of the SOFC according to the comparative example will not be separately described so as to avoid repetition of description.

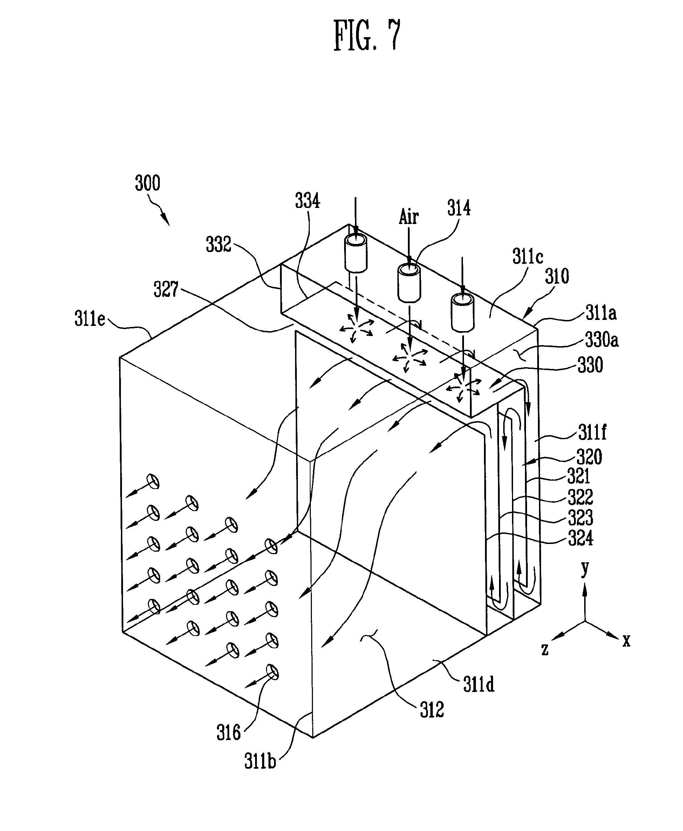

FIG. 7 is a schematic perspective view of an SOFC housing according to still another embodiment of the present invention.

Referring to FIG. 7, the housing 300 includes a housing body 310, a flow path extending unit 320 coupled to the housing body 310, and a blocking, or diverting, unit 330.

The housing body 310 is provided with a first wall 311a, a second wall 311b opposite to the first wall 311a at a predetermined interval, a third wall 311c for connecting tops of the first and second walls 311a and 311b to each other therethrough, a fourth wall 311d opposite to the third wall 311c to connect bottoms of the first and second walls 311a and 311b therethrough, a fifth wall 311e for connecting one edges of the first to fourth walls 311a to 311d therethrough, and a sixth wall 311f opposite to the fifth wall 311e to connect the other edges of the first to fourth walls 311a to 311d therethrough.

The housing body 310 is further provided with an internal space 312, a plurality of first openings 314 connected to the internal space 312 so that a fluid can flow therethrough, and a plurality of second openings 316 connected to the internal space 312 so that the fluid can flow therethrough. The plurality of first openings 314 are formed on the third wall 311c corresponding to an upper wall of the housing body 310, and the plurality of second openings 316 are formed on the second wall 311b.

In this embodiment, the three first openings 314 are disposed in a line at a predetermined interval in a direction parallel with the first wall 311a. The plurality of second openings 316 are disposed in a predetermined pattern on the second wall 311b.

The blocking unit 330 is disposed in the housing body 310 while being spaced apart from the three first openings 314 at a predetermined interval. If the blocking unit 330 is provided to be spaced apart from the three first openings 314 at the predetermined interval, air flowing into the housing body 310 through the first openings 314 bumps against the blocking unit 330 and is then appropriately distributed or diverted. In this embodiment, the blocking unit 330 is provided with a first blocking wall 332 extending by a predetermined length inside the housing body 310 from the third wall 311c, and a second blocking wall 334 extending toward the first wall 311a from an end edge of the first blocking wall 332. An end edge of the second blocking wall 334 is spaced apart from the first wall 311a at a predetermined interval.

In one embodiment, the blocking unit 330 may be formed as one outer surface of the flow path extending unit 320 fixed inside the housing body 310. In this case, the first blocking wall 332 becomes an internal partition wall for allowing the flow path extending unit 320 to be fixedly connected thereto in the housing body 310. The second blocking wall 334 becomes one wall of the flow path extending unit 320, and its outer surface serves as the blocking unit 330.

The flow path extending unit 320 has a flow path of which the length is sufficiently longer than that in its width direction (the x-direction). The flow path structure of the flow path extending unit 320 is formed so that the air distributed from the blocking unit 330 can one-dimensionally flow. In this embodiment, the flow path extending unit 320 is provided with planar first, second, third and fourth partition walls 321, 322, 323 and 324 disposed in an interdigitated form at a predetermined interval. The third and fourth partition walls 323 and 324 may be referred to as another first and second partition walls, respectively.

The first partition wall 321 extends toward the fourth wall 311d from the end edge of the second blocking wall 334, and an end of the first partition wall 321 is spaced apart from the fourth wall 311d at a predetermined interval in the y-direction. The second partition wall 322 extends toward the second blocking wall 334 from the fourth wall 311d, and an end of the second partition wall 322 is spaced apart from the second blocking wall 334 at the predetermined interval. The third partition wall 323 extends toward the fourth wall 311d from a middle portion of the second blocking wall 334, and an end of the third partition wall 323 is spaced apart from the fourth wall 311d at the predetermined interval. The fourth partition wall 324 extends toward the second blocking wall 334 from the fourth wall 311d, and an end of the fourth partition wall 324 is spaced apart from the second blocking wall 334 at the predetermined interval.

The first to fourth partition walls 321, 322, 323 and 324 are spaced apart from their adjacent partition walls at the predetermined interval. Both sides of each of the first to fourth partition walls 321, 322, 323 and 324 are connected to the fifth and sixth walls 311e and 311f, respectively.

According to the aforementioned structure, the air flowing into the housing 300 through the first openings 314 bumps against the blocking unit 330 and is then distributed appropriately into a distribution space 330a between the blocking unit 330 and the first openings 314 or between the blocking unit 330 and the inner surface of the third wall 311c. The air distributed into the distribution space 330a naturally flows into the space between the flow path extending unit 320 and the first wall 311a. Then, the air one-dimensionally flows into the space between the flow path extending unit 320 and the first wall 311a, and the flow path of the flow path extending unit 320. At this time, vector components of the air are unified. The air discharged from an outlet 327 of the flow path extending unit 320 passes through the internal space 312 at a substantially uniform velocity and is then discharged to the outside of the housing 300 through the second openings 316.

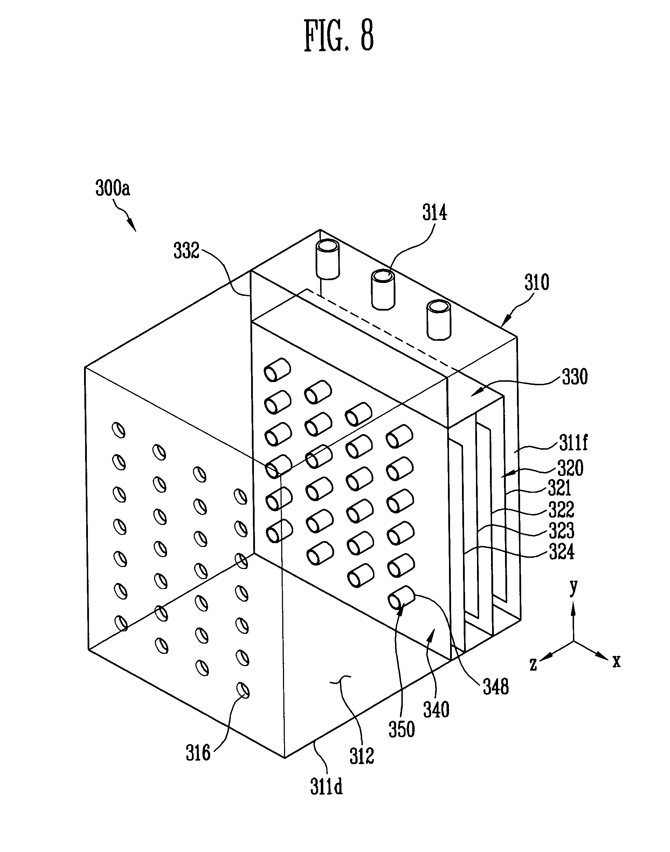

Referring to FIG. 8, the housing 300a includes a housing body 310, a flow path extending unit 320, a blocking unit 330, a perforated plate 340 and a plurality of guide tubes 350.

The housing 300a of this embodiment is substantially identical to the housing 300 described with reference to FIG. 7, except the perforated plate 340 and the guide tubes 350.

The perforated plate 340 is disposed between a first blocking wall 332 and a fourth wall 311d corresponding to a bottom wall of the housing body 310. The perforated plate 340 is disposed between an internal space 312 of the housing 300a and the flow path extending unit 320. The perforated plate 340 is provided with a plurality of holes 348 through which a fluid discharged from the flow path extending unit 320 passes. The guide tubes 350 are coupled to the holes 348, respectively.

In this embodiment, the perforated plate 340 is substantially identical to the perforated plate 227 described with reference to FIG. 3, except the installation position and size of the perforated plate 340.

The plurality of guide tubes 350 are respectively coupled to the holes 348 on one surface of the perforated plate 340 opposite to second openings 316. Each of the guide tubes 350 guides the flow of air so that vector components of the air discharged from the flow path extending unit 320 to the internal space 312 through the holes 348 of the perforated plate 340 are converted into a direction parallel with the z-direction. The protruding length of the guide tubes 350 may be controlled depending on the flow or velocity of the fluid.

More specifically, the air discharged from the flow path extending unit 320 maintains a velocity vector to a certain degree. Therefore, when passing through the holes 348 of the perforated plate 340, the air does not flow in a direction (the z-direction) perpendicular to the perforated plate 340 but flows inclined to a certain degree toward the bottom of the housing 300a. In this case, a portion of the air passing through the perforated plate 340 may not flow through the second openings 316 but circulate in the internal space 312.

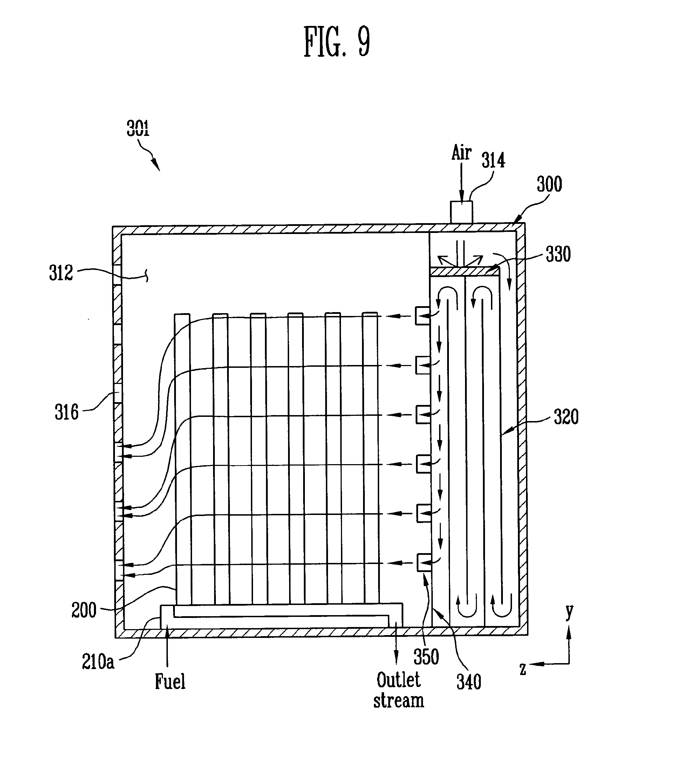

However, as illustrated in FIG. 9, in the SOFC 301 having the housing 300a, the flow of the air passing through the perforated plate 340 is guided in the z-direction by the guide tubes 350, so that the flow of the air circulating in the internal space 312 is removed, and accordingly, the flow of the air in the internal space 312 is unified in the z-direction.

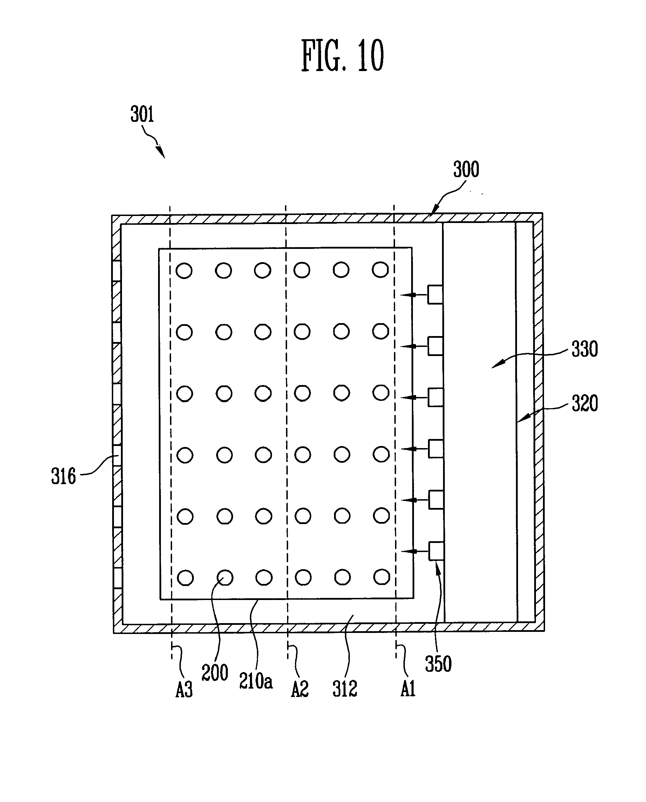

Flows of the air were measured in the internal space 312 of the SOFC 301 of this embodiment. As illustrated in FIG. 10, flows of the air were measured in front, middle and rear portions A1, A2 and A3 of a stack including a plurality of cells and top, center and bottom portions of each of the cells, respectively. In the stack, the plurality of cells are disposed in the flow direction of the air in a predetermined pattern, e.g., 6 horizontal lines and 9 vertical lines.

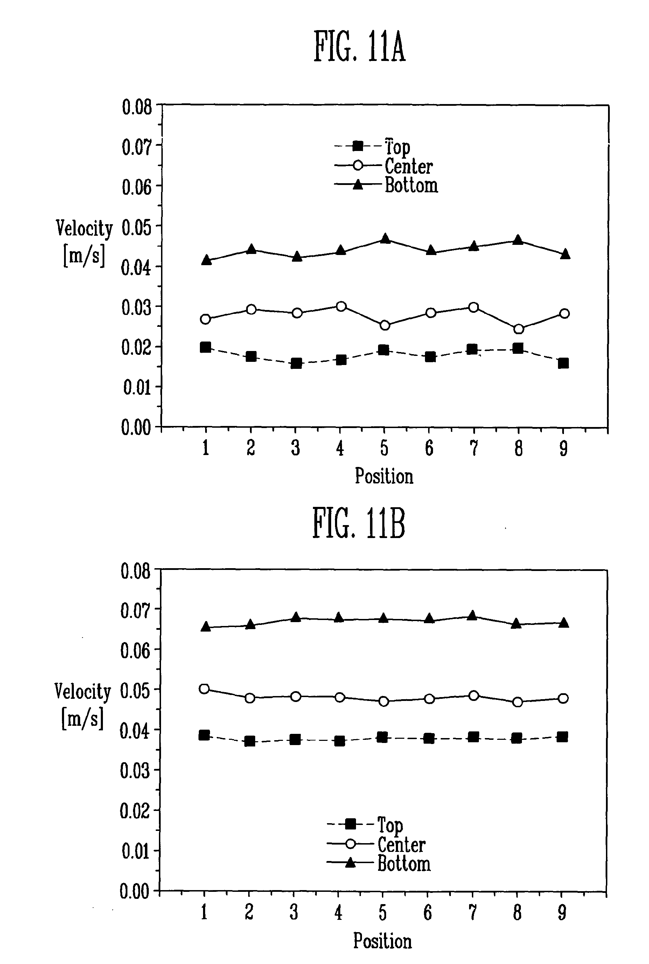

FIG. 11A illustrates results obtained by measuring flow velocities of the air at top, center and bottom portions around each of the cells on first horizontal line in the front portion A1. As illustrated in FIG. 11A, the velocities of the air at bottom center and top portions around respective nine cells in the front portion A1 were about 0.045±0.003m/s, about 0.025±0.005m/s and about 0.017±0.0002m/s, respectively.

FIG. 11B illustrates results obtained by measuring flow velocities of the air at top, center and bottom portions between adjacent cells on third and fourth lines in the middle portion A2. As illustrated in FIG. 11B, the velocities of the air at bottom, center and top portions between nine pairs of adjacent cells in the middle portion A2 were about 0.068±0.002m/s, about 0.049±0.002m/s and about 0.039±0.0001m/s, respectively.

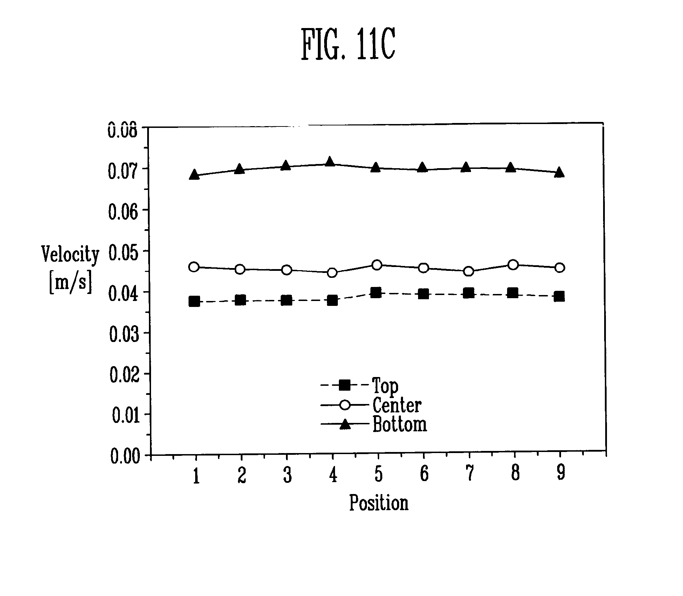

FIG. 11C illustrates results obtained by measuring flow velocities of the air at top, center and bottom portions around each of the cells on a sixth line in the rear portion A3. As illustrated in FIG. 11C, the velocities of the air at bottom, center and top portions around the respective nine cells in the rear portion A3 were about 0.068±0.002m/s, about 0.045±0.001m/s and about 0.037±0.0001m/s, respectively. According to this embodiment, the velocity distributions of the air at the top, center and bottom portions of the front portion A1 in the housing of the SOFC 301 had deviations of about 9.5%, about 7.5% and about 4.4%, respectively. A uniform deviation of about 1.3 to about 1.9% was shown at all the positions of the middle and rear portions A2 and A3. As such, in the SOFC 301 of this embodiment, it can be seen that the velocity distribution of the fluid for each position around the cells in the housing is substantially uniform.

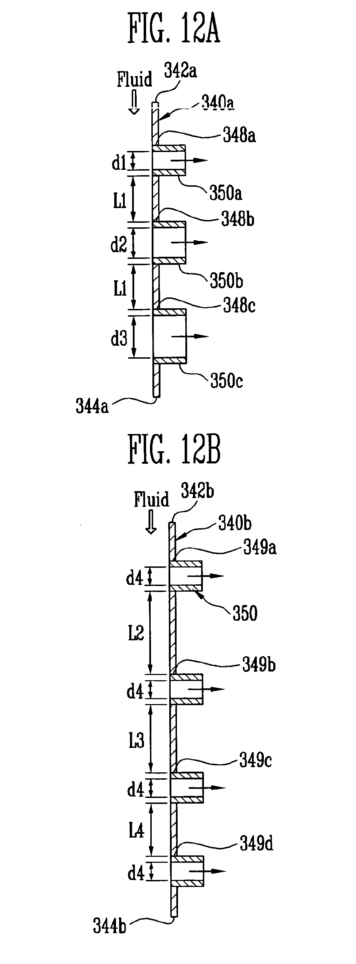

The embodiment of FIGs. 12A and 12B provides the structures of perforated plates and guide tubes applicable to the housings using the perforated plate or the perforated plate and guide tubes according to the aforementioned embodiments.

Referring to FIG. 12A, a perforated plate 340a is provided with a plurality of holes 348a, 348b and 348c. At this time, the diameters of the holes 348a, 348b and 348c may be increased as the holes 348a, 348b and 348c are positioned close to the other side 344a of the perforated plate 340a from one side 342a of the perforated plate 340a, at which a fluid first arrives. That is, the perforated plate 340a may be provided so that the first diameter d1 of the first hole 348a is smaller than the second diameter d2 of the second hole 348b, and the second diameter d2 of the second hole 348b is smaller than the third diameter d3 of the third hole 348c. At this time, distances L1 between adjacent holes may be identical.

Meanwhile, when guide tubes 350a, 350b and 350c are coupled to the holes 348a, 348b and 348c of the perforated plate 340a, respectively, the sectional areas of hollow portions of the guide tubes 350a, 350b and 350c may be increased as the guide tubes 350a, 350b and 350c are positioned close to the other side 344a of the perforated plate 340a from one side 342a of the perforated plate 340a.

Referring to FIG. 12B, a perforated plate 340b is provided with a plurality of holes 349a, 349b, 349c and 349d. At this time, the intervals between adjacent holes may be decreased as the holes 349a, 349b, 349c and 349d are positioned close to the other side 344b of the perforated plate 340b from one side 342b of the perforated plate 340b, at which the fluid first arrives. That is, in the perforated plate 340b, the first interval L2 between the adjacent first and second holes 349a and 349b is smaller than the second interval L3 between the adjacent second and third holes 349b and 349c. The second interval L3 between the adjacent second and third holes 349b and 349c is smaller than the third interval L4 between the adjacent third and fourth holes 349c and 349d. At this time, the diameters d4 of the respective holes may be constant.

Meanwhile, guide tubes 350 having the same sectional area of hollow portions may be coupled to the holes 349a, 349b, 349c and 349d of the perforated plate 340b, respectively. In this case, in the perforated plate 340b, the intervals between adjacent guide tubes 350 may be decreased as the guide tubes 350 are positioned close to the other side 344b of the perforated plate 340b from one side 342b of the perforated plate 340b.

It will be understood in the above description that while the hole/guide tube diameters and intervals between holes/guide tubes may generally increase/decrease as described above, variations are possible and fall within the scope of the invention.

Hereinafter, the SOFC of this embodiment and its operation will be described in detail.

Referring back to FIG. 9, the SOFC 301 of this embodiment includes a plurality of cells 200, a fuel supply unit (not shown) for supplying a fuel to each of the cells 200, an oxidizer supply unit (not shown) for supplying an oxidizer to each of the cells 200, and a housing 310 for accommodating the plurality of cells 200. The fuel supply unit may include a manifold 210a. The oxidizer supply unit is connected to the first openings 314 through a connecting means such as a pipe so that a fluid can flow therethrough. The oxidizer supply unit may supply air under a predetermined pressure.

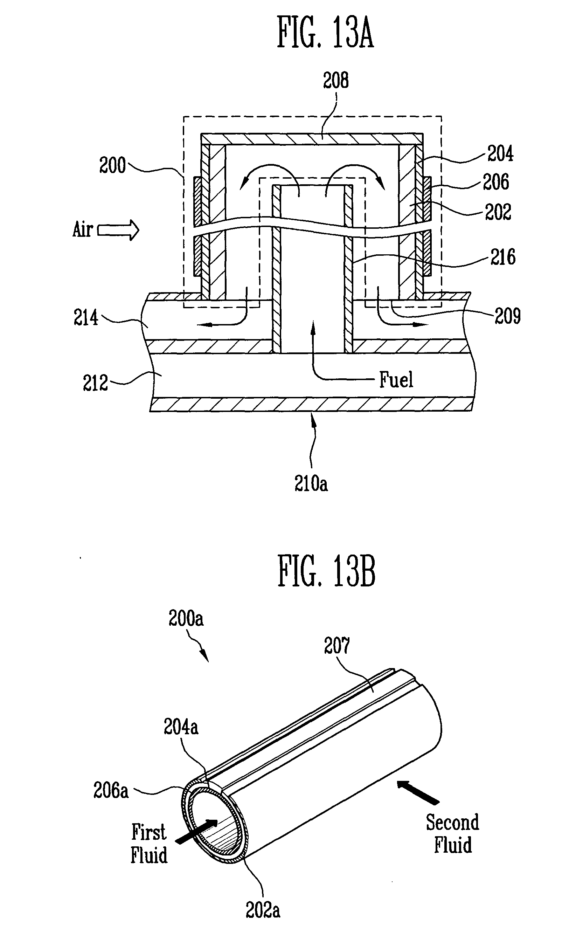

Specifically, as illustrated in FIG. 13A, a manifold 210a according to one embodiment has a two-layered structure and is provided to supply a fuel to a cell 200 through a fuel supply tube 216 connected to a first layer 212 so that the fluid can flow therethrough. The fuel supply tube 216 is deeply inserted into a hollow portion of the cell 200 while passing through a second layer 214, and the end portion of the fuel supply tube 216 is spaced apart from one cover 208 of the cell 200.

The cell 200 includes a tubular anode electrode 202 for forming a support, and an electrolyte layer 204 and a cathode electrode 206, sequentially stacked on an outer surface of the anode electrode 202. The other end of the cell 200 has an opened state and is connected to the second layer 214 of the manifold 210a so that the fluid can flow therethrough. In this embodiment, the cell 200 is provided with a structure having a closed one end by the cover 208, which is called as a cap.

The fuel supplied into the cell 200 is supplied to the anode electrode 202 positioned on an inner surface of the cell 200 while flowing backward in the hollow portion of the cell 200 along the outer surface of the fuel supply tube 216. The cell 200 generates electricity through an electrochemical reaction of fuel and oxygen respectively supplied to the anode and cathode electrodes 202 and 206. Here, the oxygen is contained in the air supplied through the oxidizer supply unit. The oxygen is uniformly supplied into the housing while passing through a flow path provided in the housing 310 of this embodiment. The non-reacted fuel and reaction by-products discharged from the hollow portion of the cell 200 are discharged to the exterior of the manifold 210a through the second layer 214 of the manifold 210a.

Meanwhile, in addition to the aforementioned structure, another structure may be used in the SOFC cell available for this embodiment.

For example, as illustrated in FIG. 13B, a cell 200a according to another embodiment may include a sealless cylindrical cell developed by Westinghouse (currently, Siemens-Westinghouse). In this case, manifolds may be disposed at both ends of the cell 200a.

The cell 200a includes a tubular cathode electrode 206a for forming a support, and an electrolyte layer 204a and an anode electrode 202a, subsequently stacked on an outer surface of the cathode electrode 206a. The cell 200a further includes a cathode interconnector 207 connected to the cathode electrode 206a while passing through the anode electrode 202a and the electrolyte layer 204a. The cathode interconnector 207 is spaced apart from the cathode electrode 206a at a predetermined interval while extending in a length direction of the cell 200a. The electrolyte layer 204a is formed of an ion conducting oxide for transporting oxygen ions or protons.

In the aforementioned embodiments, the cells have been described as anode and cathode supported cells. However, the cells of these embodiments may be formed as tubular SOFC cells using a separate support.

According to the aforementioned embodiments, there can be provided an SOFC housing in which a fluid flowing into the housing linearly flows along a flow path with a predetermined length or longer, so that a uniform flow of air flows around a plurality of SOFC cells.

Also, there can be provided an SOFC housing in which the fluid flowing into the housing is guided to linearly flow and then flow parallel with a direction perpendicular to a plane, so that a more uniform flow of air flows around a plurality of SOFC cells.

Also, there can be provided an SOFC housing in which the fluid flowing into the housing bumps and then linearly flows or the linearly flowing fluid is distributed through a plurality of holes, so that a more uniform flow of air flows around the plurality of SOFC cells, in addition to the aforementioned configuration.

Also, when it is assumed that a uniform flow of air is supplied around the respective SOFC cells, thereby supplying the same flow of fuel to each of the SOFC cells, the performances of the respective SOFC cells can be uniformly maintained or improved as compared with an SOFC stack or system having the same volume or specification. Moreover, since the difference in performances between the cells is decreased by the stable performances of the respective SOFC cells, an SOFC stack or system can be stably operated for a long period of time while improving the entire performance of the stack or system having combined SOFC cells.

Although embodiments of the invention have been described with a specific plate structure that provides a substantially zig-zag flow path, the invention is intended to cover any structure that is capable of extending the flow path length within the housing. Therefore, other forms of flow path, such as meandering flow paths, are also within the scope of the invention as defined by the claims.

While the present invention has been described in connection with the above exemplary embodiments, it is to be understood that invention is not limited to the embodiments and various modifications and equivalent arrangements are included in the scope of the invention as defined by the claims.

## Claims

1. A solid oxide fuel cell SOFC comprising:
a housing (100, 200); and
a plurality of SOFC cells (200) within the housing, wherein the housing comprises:
a first wall (111a, 211a) having an inlet (114, 214) to allow fluid to flow into the housing and an outlet (116, 216) to allow the fluid to flow out of the housing; and
flow path extending means (120, 220) extending from the inlet, the flow path extending means being configured so that fluid flowing into the housing through the inlet flows in a zigzag shape or a meandering shape through the flow path extending means, the flow path extending means comprising:
a plurality of planar partition walls (121, 123, 125) disposed in an interdigitated form between the first wall of the housing (111a, 211a) and a second wall of the housing (111 b) opposite the first wall,
wherein a first one (121) of the planar partition walls is arranged so that fluid flowing into the inlet (114) in a first direction continues to flow in the first direction along the first one of the planar partition walls; and
the fluid is arranged to flow uniformly across the plurality of SOFC cells in a second direction that is opposite to the first direction before being discharged through the outlet in the second direction.

2. The solid oxide fuel cell of claim 1, wherein the flow path extending means is arranged to form a plurality of interconnected flow paths, wherein fluid flowing along each of the flow paths is confined to flow in a single direction.

3. The solid oxide fuel cell of claim 2, wherein the flow path extending means is arranged so that fluid flowing in the flow paths flows in opposite directions in adjacent ones of the flow paths.

4. The solid oxide fuel cell of any one of the preceding claims, wherein the plurality of planar partition walls include first and second partition walls, one end of the or each of the first partition walls (121, 125) being attached to the first wall (111a, 211a) adjacent to the inlet and one end of the or each of the second partition walls (123) being attached to the second wall (111b).

5. The solid oxide fuel cell of any one of the preceding claims, wherein the outlet comprises a slot (116) in a bottom portion of the first wall (111a) or comprises a plurality of outlet holes (216) in the first wall (211a).

6. The solid oxide fuel cell of any one of the preceding claims, further comprising a perforated plate (227) coupled to an outlet side of the flow path extending means (220).

7. The solid oxide fuel cell of any one of the preceding claims, wherein the perforated plate (227) is perpendicular to the first partition walls (221, 225).

8. The solid oxide fuel cell of claim 6 or 7, wherein the perforated plate has a plurality of discharge holes (348, 348a - c, 349a - d), wherein each of the discharge holes may have a guide tube (350) disposed therein.

9. The solid oxide fuel cell of claim 8, wherein the diameters of the discharge holes (348a - c) and/or the guide tubes increase with increasing distance of the discharge holes from the outlet side of the flow path extending means.

10. The solid oxide fuel cell of claim 9, wherein the intervals between adjacent discharge holes (349a - d) and/or the guide tubes decrease with increasing distance of the discharge holes from the outlet side of the flow path extending means.

## Patentansprüche

1. Festoxidbrennstoffzelle SOFC, umfassend:
ein Gehäuse (100, 200); und
eine Vielzahl von SOFC-Zellen (200) in dem Gehäuse, wobei das Gehäuse umfasst:
eine erste Wand (111a, 211a) mit einem Einlass (114, 214), um ein Fluid in das Gehäuse einfließen zu lassen, sowie einem Auslass (116, 216), um das Fluid aus dem Gehäuse ausfließen zu lassen; und
Strömungswegerstreckungsmittel (120, 220), das sich vom Einlass aus erstreckt,
wobei das Strömungswegerstreckungsmittel so ausgebildet ist, dass durch den Einlass in das Gehäuse einfließendes Fluid in einer Zickzackform oder
Mäanderform durch das Strömungswegerstreckungsmittel fließt, wobei das Strömungswegerstreckungsmittel umfasst:
eine Vielzahl von planaren Zwischenwänden (121, 123,125), die in einer ineinandergreifenden Form zwischen der ersten Wand des Gehäuses (111a, 211a) und einer zweiten Wand des Gehäuses (111 b) gegenüber der ersten Wand angeordnet sind,
wobei eine erste (121) der planaren Zwischenwände derart angeordnet ist, dass in einer ersten Richtung in den Einlass (114) fließendes Fluid in der ersten Richtung entlang der ersten der planaren Zwischenwände weiterfließt; und
das Fluid derart vorgesehen ist, dass es gleichmäßig über die Vielzahl von SOFC-Zellen in einer zweiten Richtung fließt, die der ersten Richtung entgegengesetzt ist,
bevor sie durch den Auslass in der zweiten Richtung ausfließt.

2. Festoxidbrennstoffzelle nach Anspruch 1, wobei das
Strömungswegerstreckungsmittel so angeordnet ist, dass es eine Vielzahl von miteinander verbundenen Strömungswegen ausbildet, wobei der Fluss eines entlang jedes der Strömungswege fließenden Fluids in eine einzige Richtung begrenzt ist.

3. Festoxidbrennstoffzelle nach Anspruch 2, wobei das
Strömungswegerstreckungsmittel so angeordnet ist, dass in den Strömungswegen fließendes Fluid in benachbarten der Strömungswege in entgegengesetzte Richtungen fließt.

4. Festoxidbrennstoffzelle nach einem der vorstehenden Ansprüche, wobei die Vielzahl von planaren Zwischenwänden erste und zweite Zwischenwände umfasst, wobei ein Ende der oder jeder der ersten Zwischenwände (121, 125) an der ersten Wand (11a, 211a) angrenzend an den Einlass angebracht ist, und ein Ende der oder jeder der zweiten Zwischenwände (123) an der zweiten Wand (111 b) angebracht ist.

5. Festoxidbrennstoffzelle nach einem der vorstehenden Ansprüche, wobei der Auslass einen Schlitz (116) in einem Bodenabschnitt der ersten Wand (111a) umfasst oder eine Vielzahl von Auslassöffnungen (216) in der ersten Wand (211a) umfasst.

6. Festoxidbrennstoffzelle nach einem der vorstehenden Ansprüche, ferner umfassend eine perforierte Platte (227), die mit einer Auslassseite des Strömungswegerstreckungsmittels (220) verbunden ist.

7. Festoxidbrennstoffzelle nach einem der vorstehenden Ansprüche, wobei die perforierte Platte (227) senkrecht zu den ersten Zwischenwänden (221, 225) ist.

8. Festoxidbrennstoffzelle nach Anspruch 6 oder 7, wobei die perforierte Platte eine Vielzahl von Ablassöffnungen (348, 348a - c, 349 a - d) aufweist, wobei jede der Ablassöffnungen ein darin angeordnetes Führungsrohr (350) aufweisen kann.

9. Festoxidbrennstoffzelle nach Anspruch 8, wobei sich die Durchmesser der Ablassöffnungen (348a - c) und/oder der Führungsrohre mit zunehmendem Abstand der Ablassöffnungen von der Auslassseite des Strömungswegerstreckungsmittels vergrößern.

10. Festoxidbrennstoffzelle nach Anspruch 9, wobei sich die Zwischenräume zwischen benachbarten Ablassöffnungen (349a - d) und/oder den Führungsrohren mit zunehmendem Abstand der Ablassöffnungen von der Auslassseite des Strömungswegerstreckungsmittels verkleinern.

## Revendications

1. Pile à combustible à oxyde solide SOFC, comprenant :
un boîtier (100, 200) ; et
une pluralité de piles SOFC (200) à l'intérieur du boîtier, dans laquelle le boîtier comprend :
une première paroi (111a, 211a) ayant un orifice d'admission (114, 214) pour permettre à un fluide de s'écouler dans le boîtier et un orifice de sortie (116, 216) pour permettre au fluide de s'écouler hors du boîtier ; et
un moyen d'extension de trajet d'écoulement (120, 220) s'étendant à partir de l'orifice d'admission, le moyen d'extension de trajet d'écoulement étant configuré de telle sorte que le fluide s'écoulant dans le boîtier à travers l'orifice d'admission s'écoule suivant une forme en zigzag ou une forme de méandre à travers le moyen d'extension de trajet d'écoulement, le moyen d'extension de trajet d'écoulement comprenant :
une pluralité de parois de séparation planes (121, 123, 125) disposées sous forme interdigitée entre la première paroi du boîtier (111a, 211a) et une seconde paroi du boîtier (111b) opposée à la première paroi,
dans laquelle une première paroi (121) des parois de séparation planes est disposée de telle sorte que le fluide s'écoulant dans l'orifice d'admission (114) dans une première direction continue à s'écouler dans la première direction le long de la première paroi des parois de séparation planes ; et
le fluide est amené à s'écouler uniformément à travers la pluralité de piles SOFC dans une seconde direction qui est opposée à la première direction avant d'être déchargée à travers l'orifice de sortie de la seconde direction.

2. Pile à combustible à oxyde solide suivant la revendication 1, dans laquelle le moyen d'extension de trajet d'écoulement est configuré pour former une pluralité de trajets d'écoulement interconnectés, le fluide s'écoulant le long de chacun des trajets d'écoulement étant confiné à un écoulement dans une direction unique.

3. Pile à combustible à oxyde solide suivant la revendication 2, dans laquelle le moyen d'extension de trajet d'écoulement est configuré de telle sorte que le fluide s'écoulant dans les trajets d'écoulement s'écoule dans des directions opposées dans des trajets adjacents des trajets d'écoulement.

4. Pile à combustible à oxyde solide suivant l'une quelconque des revendications précédentes, dans laquelle la pluralité de parois de séparation planes comprend des première et seconde parois de séparation, une extrémité de la ou chacune des premières parois de séparation (121, 125) étant fixée à la première paroi (111a, 211a) adjacente à l'orifice d'admission et une extrémité de la ou chacune des secondes parois de séparation (123) étant fixée à la seconde paroi (111b).

5. Pile à combustible à oxyde solide suivant l'une quelconque des revendications précédentes, dans laquelle l'orifice de sortie comprend une fente (116) dans une portion inférieure de la première paroi (111a) ou comprend une pluralité de trous de sortie (216) dans la première paroi (211a).

6. Pile à combustible à oxyde solide suivant l'une quelconque des revendications précédentes, comprenant en outre une plaque perforée (227) couplée à un côté de sortie du moyen d'extension de trajet d'écoulement (220).

7. Pile à combustible à oxyde solide suivant l'une quelconque des revendications précédentes, dans laquelle la plaque perforée (227) est perpendiculaire aux premières parois de séparation (221, 225).

8. Pile à combustible à oxyde solide suivant la revendication 6 ou 7, dans laquelle la plaque perforée comporte une pluralité de trous de déchargement (348, 348a-c, 349a-d), chacun de trous de déchargement pouvant comporter un tube de guidage (350) disposé dans celui-ci.

9. Pile à combustible à oxyde solide suivant la revendication 8, dans laquelle les diamètres des trous de déchargement (348a-c) et/ou des tubes de guidage augmentent avec l'augmentation de la distance des trous de déchargement à partir du côté de sortie du moyen d'extension de trajet d'écoulement.

10. Pile à combustible à oxyde solide suivant la revendication 9, dans laquelle les intervalles entre des trous de déchargement adjacents (349a-d) et/ou les tubes de guidage diminuent avec l'augmentation de la distance des trous de déchargement à partir du côté de sortie du moyen d'extension de trajet d'écoulement.
